# EUROPÄISCHE PATENTANMELDUNG

(11) **EP 1 547 880 A1**
(43) Veröffentlichungstag der Anmeldung: **29.06.2005**
(21) Anmeldenummer: 04026425.1
(22) Anmeldetag: 08.11.2004
(51) Int. Cl.: B60S 1/04

(54) **Scheibenwischvorrichtung, insbesondere für ein Kraftfahrzeug**

(30) Priorität: 23.12.2003 DE 10360831
(71) Anmelder: ROBERT BOSCH GMBH, 70442 Stuttgart (DE)
(72) Erfinder: Steimel, Thomas, 77815 Buehl (DE)

(57) **Zusammenfassung**

Es wird eine Scheibenwischvorrichtung (10), insbesondere für ein Kraftfahrzeug vorgeschlagen, die ein Trägerrohr (12) und ein Wischerlager (14, 16, 18) umfasst, in dem zumindest eine Wischerwelle (20, 22, 24) gelagert ist, die mit einem Wischhebel (26, 28) verbindbar ist, wobei das Wischerlager (14, 16, 18) mindestens eine Aufnahme (50) aufweist, in der das Trägerrohr (12) kraftschlüssig aufgenommen ist.

## Beschreibung

### Stand der Technik

Die Erfindung betrifft eine Scheibenwischvorrichtung, insbesondere für ein Kraftfahrzeug nach Gattung des unabhängigen Anspruchs.

Eine derartige Scheibenwischvorrichtung ist bereits aus der DE-A-102 32 877 bekannt. Diese umfasst ein Trägerrohr mit zwei Enden, an dem jeweils ein Wischerlager befestigt ist, in dem jeweils eine Wischerwelle gelagert ist. Die Wischerwelle ist mit einem Wischhebel verbunden, der im Betrieb pendelnd über die Scheibe des Kraftfahrzeugs bewegt wird. Die Wischerlager sind hierbei aus Druckguss hergestellt und an den Enden des Trägerrohrs mit dem selben vercrimmpt.

Weiterhin ist bekannt, die Wischerlager einstückig mit dem Trägerrohr auszubilden, wobei lediglich eine Lagerbuchse in eine Öffnung des Trägerrohrs eingesteckt und fixiert ist oder das Wischerlager direkt im Spritzguß-Verfahren an das Trägerrohr anzuspritzen.

### Vorteile der Erfindung

Die erfindungsgemäße Scheibenwischvorrichtung mit den Merkmalen des Hauptanspruchs hat den Vorteil, dass das Trägerrohr kraftschlüssig in einer Aufnahme des Wischerlagers aufgenommen ist. Auf diese Weise können große Stückzahlen von Wischerlagern produziert werden, die bei verschiedenen Scheibenwischvorrichtungen unterschiedlicher Geometrie verwendet werden können. Darüber hinaus kann auch die Wischgeometrie bzw. das Wischfeld der Scheibenwischvorrichtung, nach dem Einbau im Kraftfahrzeug noch verändert werden.

Durch die in den Unteransprüchen aufgeführten Maßnahmen ergeben sich vorteilhafte Weiterbildungen und Verbesserungen der im Hauptanspruch angegebenen Merkmale.

Ist das Trägerrohr in der Aufnahme form- und kraftschlüssig aufgenommen, so wird eine besonders stabile Ausbildung der Scheibenwischvorrichtung erzielt.

Weiterhin ist es als vorteilhaft anzusehen, wenn die Aufnahme ein erstes Teil und ein zweites Teil umfasst, die zur Erzeugung einer Klemmspannung zwischen dem Trägerrohr und der Aufnahme verbunden sind. Damit wird ein einfacher Zusammenbau der Scheibenwischvorrichtung gewährleistet.

Hierbei ist es besonders vorteilhaft, wenn das erste und das zweite Teil jeweils ein Verhakungselement aufweisen, die zur Verbindung der beiden Teile in Eingriff gebracht sind. Durch die einfache Verhakung werden Bauteile eingespart, was die Kosten der erfindungsgemäßen Scheibenwischvorrichtung minimiert.

Weist zumindest ein Verhakungselement eine definierte Schwachstelle derart auf, dass das Wischerlager vom Trägerrohr durch eine Krafteinwirkung auf die Wischerwelle lösbar ist, so kann ein Fußgängeraufprallschutz einfach und kostengünstig realisiert werden. Beim Aufprall eines Fußgängers auf die Wischerwelle wirkt auf diese eine Kraft, wodurch sich das Wischerlager vom Trägerrohr löst. Die Wischerwelle kann dann zurückweichen und aus dem Aufprallbereich ins innere des Kraftfahrzeugs abtauchen, wodurch die Gefahr einer weiteren Verletzung des Fußgängers reduziert wird.

Weiterhin ist es von Vorteil, wenn das erste und das zweite Teil durch ein Befestigungselement, insbesondere eine Schraube oder ein Niet verbunden sind, da diese kostengünstig und bei der Montage leicht Handzuhaben sind. Auch dieses Befestigungselement kann über eine Schwachstelle, bzw. über eine Sollbruchstelle zum Fußgängeraufprallschutz verfügen.

Weist die Aufnahme eine im Querschnitt im Wesentlichen u-förmige Ausnehmung mit einer Basis und einer Schenkelhöhe auf, so ist das Wischerlager sehr einfach am Trägerrohr zu befestigen und weist ausreichend Stabilität bezüglich der verschiedenen Belastungsrichtungen auf.

Besonders vorteilhaft ist es, wenn die Aufnahme von im Wesentlichen länglicher Gestalt ist, da die radialen Kräfte des Wischerlagers auf diese Weise optimal aufgefangen werden.

Zur Verbesserung der Verbindung zwischen Trägerrohr und Wischerlager ist es von Vorteil, wenn die Aufnahme entlang ihrer Längserstreckung ein erstes Formschlusselement aufweist.

Weiterhin ist es vorteilhaft, wenn das Trägerrohr ein zweites Formschlusselement zur Verbindung mit der Aufnahme aufweist.

Hierbei ist es von besonderem Vorteil, wenn das zweite Formschlusselement mit dem ersten Formschlusselement der Aufnahme zusammenwirkt.

Zur Ausbildung eines Fußgängeraufprallschutzes ist es weiterhin als vorteilhaft anzusehen, wenn das zweite Teil aus Blech ausgebildet ist und eine Schwächung derart aufweist, dass das Wischerlager vom Trägerrohr durch eine Krafteinwirkung auf die Wischerwelle unter Verbiegung des zweiten Teils lösbar ist.

### Zeichnungen

Ausführungsbeispiele der Erfindung sind in den Zeichnungen dargestellt und in der nachfolgenden Beschreibung näher erläutert. Es zeigen:
Figur 1, eine erfindungsgemäße Scheibenwischvorrichtung in schematischer Darstellung,
Figur 2, ein Teil eines Wischerlagers einer erfindungsgemäßen Scheibenwischvorrichtung in perspektivischer Darstellung,
Figur 3, ein Wischerlager mit einem Abschnitt eines Trägerrohrs einer erfindungsgemäßen Scheibenwischvorrichtung in perspektivischer Darstellung,
Figur 4, die Rückansicht eines Wischerlagers aus Figur 3,
Figur 5, eine Draufsicht auf ein geöffnetes Wischerlager einer erfindungsgemäßen Scheibenwischvorrichtung,
Figur 6, ein Wischerlager aus Figur 3 in einer Variation und
Figur 7, eine erfindungsgemäße Scheibenwischvorrichtung mit einem Wischerlager aus Figur 6.

### Beschreibung der Ausführungsbeispiele

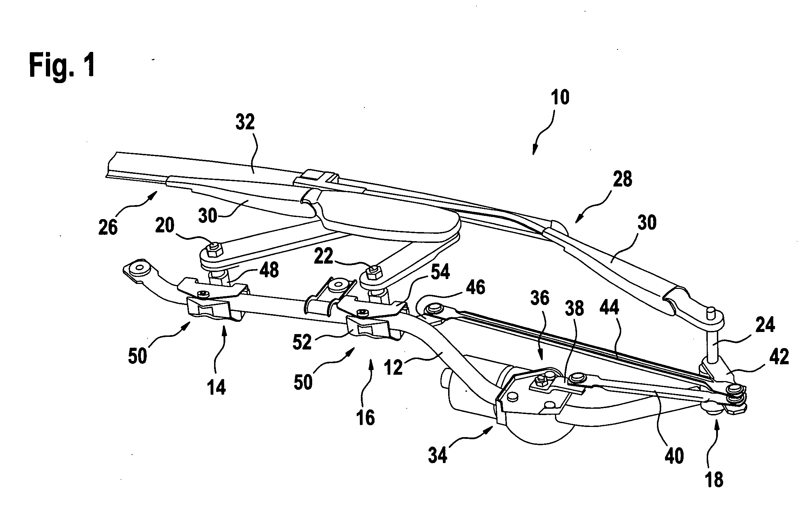

Figur 1 zeigt eine erfindungsgemäße Scheibenwischvorrichtung 10 in einer perspektivischen Darstellung.

Diese umfasst im Wesentlichen ein Trägerrohr 12 an dem drei Wischerlager 14, 16, 18 befestigt sind. In den Wischerlagern 14, 16, 18 ist jeweils eine Wischerwelle 20, 22, 24 gelagert, die mit Wischhebeln 26, 28 drehfest verbunden sind. Da es sich bei der hier dargestellten Scheibenwischvorrichtung 10 um eine sogenannte Viergelenk-Scheibenwischvorrichtung handelt, sind zwei Wischerwellen 20, 22 mit einem Wischhebel 26 verbunden. Jeder Wischhebel 26, 28 umfasst einen Wischerarm 30, der an seinem freien Ende jeweils ein Wischblatt 32 trägt.

Zum Antrieb der Wischerwellen 22, 24 ist eine Antriebseinrichtung 34 am Trägerrohr 12 befestigt. Diese weist eine Abtriebswelle 36 auf, die drehfest mit einer Abtriebskurbel 38 verbunden ist, die im Betrieb eine rotierende Bewegung oder eine Hin- und Herbewegung vollführt. An ihrem freien Ende ist die Abtriebskurbel 38 mit einer Schubstange 40 gelenkig verbunden, die wiederum eine, mit der Wischerwelle 24 drehfest verbundene Antriebskurbel 42 in eine Hin- und Herbewegung versetzt. Der Wischhebel 28 wird dadurch im Betrieb in eine pendelnde Bewegung versetzt.

Zum Antrieb der Wischerwelle 22 ist, ausgehend von der Antriebskurbel 42, eine weitere Schubstange 44 vorgesehen, die am Befestigungspunkt zwischen der Schubstange 40 und Abtriebskurbel 38 drehbeweglich angelenkt ist. Diese weitere Schubstange 44 versetzt eine weitere Antriebskurbel 46 ebenfalls in eine Hin- und Herbewegung, so dass auch die Wischerwelle 22 im Betrieb eine entsprechende Bewegung vollführt und den zweiten Wischhebel 26 in eine Pendelbewegung versetzt. Die Wischerwelle 20 ist nicht angetrieben und dient lediglich als Lenker, so dass der zweite Wischhebel 26 eine Pendel-Hubbewegung vollführt.

In einer Variation der Erfindung kann die weitere Schubstange 44 natürlich auch direkt an der Abtriebskurbel 38 angelenkt sein.

Die Wischerlager 14, 16 sind am Trägerrohr angeklemmt, so dass eine kraftschlüssige Verbindung zwischen dem Wischerlager 14, 16 und dem Trägerrohr 12 entsteht. Das dritte Wischerlager 18 ist in üblicher Weise an einem Ende des Trägerohrs 12 vercrimmpt.

Die Wischerlager 14, 16 umfassen im Wesentlichen ein Formrohr 48, in dem die Wischerwelle 22 gelagert ist. Etwa senkrecht zur Längserstreckung des Formrohrs 48 ist eine längliche Aufnahme 50 angeordnet, die zur Befestigung des Formrohrs 48 am Trägerohr 12 dient. Hierzu ist ein erstes Teil 52 vorgesehen, dass mit einem zweiten Teil 54 derart zusammenwirkt, dass das Trägerrohr 12 zwischen dem ersten und dem zweiten Teil 52 bzw. 54 eingeklemmt und damit kraftschlüssig verbunden ist.

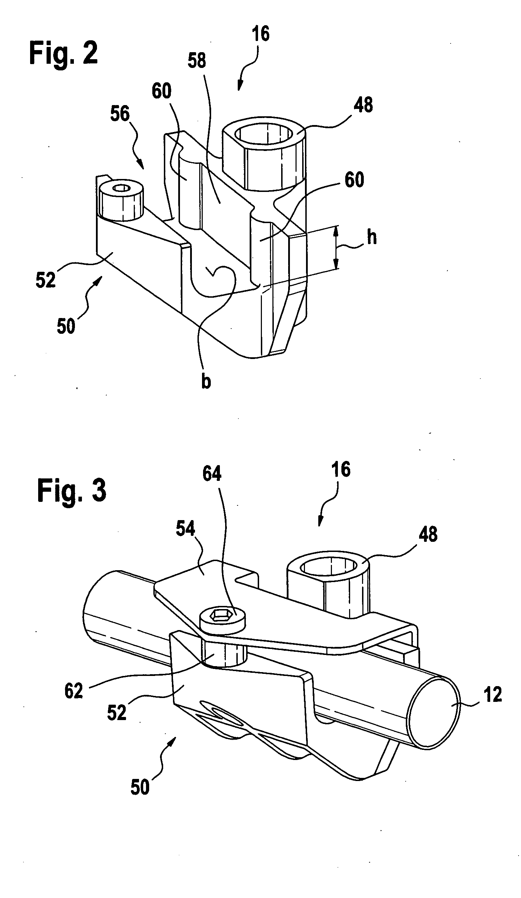

In Figur 2 ist ein Ausschnitt eines Wischerlagers 16 in einer perspektivischen Darstellung gezeigt.

Das Formrohr 48 ist von im Wesentlichen hohlzylinderförmiger Gestalt, so dass die Wischerwelle 22 (Figur 1) darin gelagert werden kann. Hierzu können entsprechende Lagerbuchsen in das Formrohr 48 eingebracht werden. Einstückig mit dem Formrohr 48 ist das erste Teil 52 der Aufnahme 50 ausgebildet. Aus Übersichtlichkeitsgründen wurde das zweite Teil 54 in dieser Figur weggelassen.

Das erste Teil 52 der Aufnahme 50 ist als längliches Kunststoff-Profilteil ausgebildet, welches eine im Querschnitt im Wesentlichen u-förmige Ausnehmung 56 aufweist die an den beiden Stirnseiten geöffnet ist. Die Ausnehmung 56 besitzt eine Basis b, die von zwei Seitenwänden mit einer Schenkelhöhe h seitlich abgeschlossen ist. Die Schenkelhöhe h ist hierbei etwas kleiner als der Durchmesser des Trägerrohrs 12. Die Breite der Basis b ist zumindest so breit wie der Durchmesser des Trägerrohrs 12, jedoch genau so breit, dass sich das Trägerrohr 12 bei der Montage leicht in die Ausnehmung 56 einlegen lässt. Dies kann auch unter leichtem Druck erfolgen ein unerwünschtes Verschieben während des Montageprozesses zu erleichtern.

Die Längserstreckung der Ausnehmung 56 verläuft etwa senkrecht zur Längserstreckung des hohlzylindrischen Formrohrs 48. Entsprechend der Geometrie der Scheibenwischvorrichtung 10 sind hier jedoch auch andere Winkel möglich.

In der Ausnehmung 56 des ersten Teils 52 sind an den Seitenwänden 58 erste Formschlusselemente 60 angeordnet, die als zylinderförmige Erhebungen aus der Seitenwand 58 herausragen, und zwar derart, dass die Symmetrieachse des zylinderförmigen ersten Formschlusselementes 60 parallel zur Ebene der Seitenwände 58 und senkrecht zur Basis b der Ausnehmung 56 verläuft und in diese hineinragt.

Auf der dem Formrohr 48 abgewandten Seite des ersten Teils 52 ist ein Schraubstutzen 62 angeordnet, der zur Verbindung des ersten Teils mit dem zweiten Teil 54 (Figur 1) dient.

In Figur 3 ist das Wischerlager 16 mit einem Abschnitt des Trägerrohrs 12 in montierter Form gezeigt.

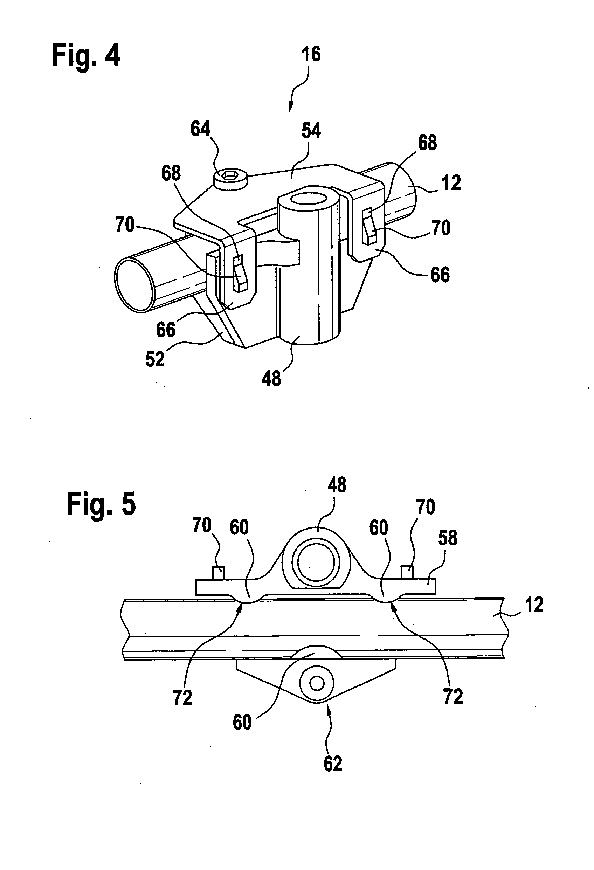

Die Aufnahme 50 umfasst das erste Teil 52, in der das Trägerrohr 12 aufgenommen ist. Das zweite Teil 54 ist als Blechbiegeteil ausgebildet und abschnittsweise von im Wesentlichen im Querschnitt L-förmiger Gestalt (Figur 4). Der erste Schenkel des L-förmigen zweiten Teils 54 ist auf der dem Formrohr 48 zugewandten Seite des ersten Teils 52 mit diesem verhakt. Es übergreift das Trägerrohr 12, so dass dieses in der Ausnehmung 56 zwischen dem ersten Teil 52 und dem zweiten Teil 54 eingeklemmt ist. Zur Erzeugung der Klemmspannung ist der zweite Schenkel des abschnittsweise L-förmigen zweiten Teils 54 auf der dem Formrohr 48 abgewandten Seite am Schraubstutzen 62 durch eine Schraube als Befestigungselement 64 verschraubt.

Dadurch, dass die Schenkelhöhe h der Ausnehmung 56 etwas niedriger ist, als der Durchmesser des Trägerrohrs 12 presst, das zweite Teil 54 das Trägerrohr 12 fest in die Ausnehmung 56.

In einer Variation kann die Schenkelhöhe der Ausnehmung 56 natürlich auch größer als der Durchmesser des Trägerrohrs 12 sein, jedoch ist es in diesem Falle vorteilhaft, wenn das zweite Teil 54 auf seiner dem Trägerrohr 12 zugewandten Seite eine oder mehrere Buckel aufweist, die das Trägerrohr 12 fest in die Ausnehmung 56 eindrücken.

In Figur 4 ist das Wischerlager 16 aus Figur 2 aus der Rückperspektive gezeigt. Das zweite Teil 54 weist eine ebene Platte als zweiter Schenkel der L-Form auf, von der sich im Wesentlichen senkrecht zwei Lappen 66 auf die dem Trägerrohr 12 zugewandten Seite aus erstrecken. Diese bilden die ersten Schenkel der L-Form. Die Lappen 66 weisen jeweils eine Öffnung als Verhakungselement 68 auf.

Auf der dem Formrohr 48 zugewandten Seite weist das erste Teil 52 rampenförmige Haken 70 als weitere Verhakungselemente auf. Diese Haken 70 korrespondieren mit den Öffnungen 68 derart, dass die Haken 70 des ersten Teils 52 in die Öffnungen 68 des zweiten Teils 54 einzugreifen vermögen. Auf der dem Formrohr 48 abgewandten Seite ist das erste Teil 52, wie bereits in Figur 3 geschildert, durch das Befestigungselement 54 mit dem ersten Teil 52 verbunden.

Die Haken 70 weisen hierbei noch Schwachstellen auf, die als Sollbruchstellen ausgebildet sind. Damit ist das Wischerlager 16 vom Trägerrohr 12 durch eine Krafteinwirkung auf die Wischerwelle 22 lösbar. Dies ist im Falle eines Aufpralles eines Fußgängers auf die Wischerwelle 22 erforderlich. Alternativ oder ergänzend hierzu können auch die Öffnungen 68 bzw. die Lappen 66 entsprechende Schwächungen aufweisen, so dass sich bei einer definierten großen Krafteinwirkung auf die Wischerwelle 22, die Lappen 66 oder ein anderer Bereich des zweiten Teils 54 derart verbiegen, dass das Wischerlager 16 zumindest teilweise vom Trägerrohr 12 gelöst wird.

In Figur 5 ist das erste Teil 52, das einstückig mit dem Formrohr 48 ausgebildet ist, in einer Draufsicht gezeigt. Das Trägerrohr 12 ist in die Ausnehmung 56 (Figur 2) eingesetzt. Die Haken 70 erstrecken sich von der Seitenwand 58 aus nach Außen. Von der selben Seitenwand 58 aus erstrecken sich die ersten Formschlusselemente 60 nach Innen in die Ausnehmung 56 (Figur 2) hinein. Insgesamt sind drei erste Formschlusselemente 60 vorgesehen, die wechselweise gegenüberliegend angeordnet sind und von beiden Seitenwänden 58 der Ausnehmung 56 in Richtung des Trägerrohrs 12 ragen. Zur verbesserten Halterung weist das Trägerrohr 12 zweite Forrnschlusselemente 72 auf, die als Einbuchtung in das Trägerrohr 12 ausgebildet sind und mit den ersten Formschlusselementen 60 des ersten Teils 52 korrespondieren.

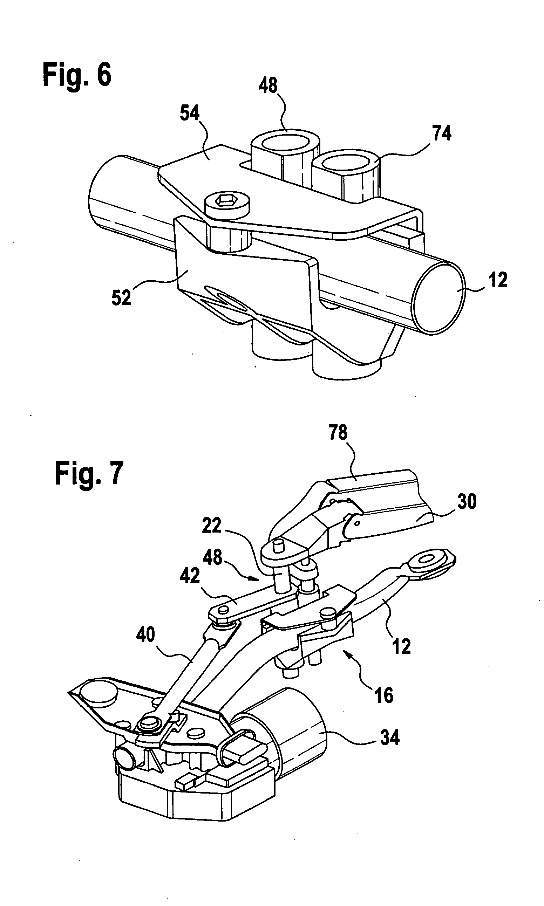

In Figur 6 ist eine Variation eines Wischerlagers aus Figur 3 dargestellt. Das hier dargestellte Wischerlager 16 ist identisch wie das Wischerlager 16 aus Figur 3 ausgebildet mit Ausnahme dessen, dass neben dem Formrohr 48 noch ein weiteres Formrohr 74 vorgesehen ist, welches im wesentlichen parallel zum ersten Formrohr 48 angeordnet ist. Bezüglich der übrigen Beschreibung wird hier auf Figur 3 verwiesen.

In Figur 7 ist eine Variation einer erfindungsgemäßen Scheibenwischvorrichtung 10 aus Figur 1 dargestellt. Das Trägerohr 12 trägt die Antriebseinrichtung 34, die über verschiedene Kurbeln und Schubstangen 40, 42, 38, die Wischerwelle 22 in eine Pendelbewegung versetzt. Die Wischerwelle 22 ist im Formrohr 48 des Wischerlagers 16 gelagert. Im weiteren Formrohr 74 ist eine weitere Wischerwelle 76 gelagert, in der ein zusätzlicher Wischhebel 78 befestigt ist. Dieser Wischhebel dient hier als Lenker und steuert den Winkel zwischen dem Wischarm 30 und dem Wischblatt 32.

In einer Variation der Erfindung können die Öffnungen 68 einen oder mehrere Schlitze aufweisen, sodass sich die Öffnungen 68 beim Aufprall eines Fußgängers auf die Wischerwelle 22 aufbiegen und somit das Wischerlager 14 vom Trägerrohr 12 lösen.

In einer weiteren Variation können anstatt den Verhakungselementen auch andere Befestigungsmittel, wie beispielsweise Schrauben, Nieten oder andere verwendet werden. Diese können auch über entsprechende Schwachstellen bzw. Sollbruchstellen verfügen, sodass ein wirksamer Fußgängeraufprallschutz realisiert werden kann. Natürlich können in einer weiteren Ausführungsform die Formrohre 48 auch mehrteilig mit der Aufnahme 50 ausgebildet sein.

In einer Abwandlung der Erfindung kann anstatt des Befestigungselementes 62 auch ein Klippselement vorgesehen sein, welches auch über eine Sollbruchstelle verfügen kann. Ebenso ist es möglich das Klippselement derart auszubilden, dass es sich der einer entsprechenden Krafteinwirkung beim Aufprall eines Fußgängers von selbst öffnet.

## Patentansprüche

1. Scheibenwischvorrichtung (10), insbesondere für ein Kraftfahrzeug, mit einem Trägerrohr (12) und mindestens einem Wischerlager (14, 16), in dem zumindest eine Wischerwelle (20, 22) gelagert ist, die mit einem Wischhebel (26) verbindbar ist, **dadurch gekennzeichnet, dass** das Wischerlager (14, 16) mindestens eine Aufnahme (50) aufweist, in der das Trägerrohr (50) kraftschlüssig aufgenommen ist.

2. Scheibenwischvorrichtung (10) nach Anspruch 1, **dadurch gekennzeichnet, dass** das Trägerrohr ( 12) in der Aufnahme (50) form- und kraftschlüssig aufgenommen ist.

3. Scheibenwischvorrichtung (10) nach einem der vorhergehenden Ansprüche, **dadurch gekennzeichnet, dass** die Aufnahme (50) zumindest ein erstes Teil (52) und ein zweites Teil (54) umfaßt, die zur Erzeugung einer Klemmspannung zwischen Trägerrohr (12) und Aufnahme (50) verbunden sind.

4. Scheibenwischvorrichtung (10) nach Anspruch 3, **dadurch gekennzeichnet, dass** das erste Teil (52) und das zweite Teil (54) mindestens jeweils ein Verhakungselement (68, 70) aufweisen, die zur Verbindung des ersten und zweiten Teils (52, 54) in Eingriff gebracht sind.

5. Scheibenwischvorrichtung (10) nach Anspruch 4, **dadurch gekennzeichnet, dass** zumindest ein einziges Verhakungselement (68, 70) eine definierte Schwachstelle oder Sollbruchstelle derart aufweist, dass das Wischerlager (14, 16) vom Trägerrohr (12) durch eine Krafteinwirkung auf die Wischerwelle (20, 22) lösbar ist.

6. Scheibenwischvorrichtung (10) nach Anspruch 3, 4 oder 5, **dadurch gekennzeichnet, dass** das erste und zweite Teil (52) durch mindestens ein Befestigungselement (64), insbesondere eine Schraube oder ein Niet, verbunden sind.

7. Scheibenwischvorrichtung (10) nach einem der Ansprüche 3 bis 6, **dadurch gekennzeichnet, dass** das erste Teil (52) der Aufnahme (50) im Querschnitt eine im wesentlichen u-förmige Ausnehmung (56) mit einer Basis (b) und einer Schenkelhöhe (h) aufweist.

8. Scheibenwischvorrichtung (10) nach einem der vorhergehenden Ansprüche, **dadurch gekennzeichnet, dass** die Aufnahme (50) von im wesentlichen länglicher Gestalt ist.

9. Scheibenwischvorrichtung (10) nach einem Ansprüche 7 und 8, **dadurch gekennzeichnet, dass** zumindest eines der Teile (52, 54) der Aufnahme (50) entlang seiner Längserstreckung zumindest ein erstes Formschlußelement (60) aufweist.

10. Scheibenwischvorrichtung (10) nach einem der vorhergehenden Ansprüche, **dadurch gekennzeichnet, dass** das Trägerrohr (12) zumindest ein zweites Formschlußelement (72) zur Verbindung mit einem Teil (52, 54) der Aufnahme (50) aufweist.

11. Scheibenwischvorrichtung (10) nach Anspruch 10, **dadurch gekennzeichnet, dass** das zweite Formschlußelement (72) mit dem ersten Formschlußelement (60) zusammenwirkt.

12. Scheibenwischvorrichtung (10) nach einem Ansprüche 3 bis 11, **dadurch gekennzeichnet, dass** das zweite Teil (54) aus Blech ausgebildet ist und eine Schwächung derart aufweist, dass das Wischerlager (14, 16) vom Trägerrohr (12) durch eine Krafteinwirkung auf die Wischerwelle (22) unter Verbiegung des zweiten Teils (54) lösbar ist.
